Europäisches Patentamt

European Patent Office

Office européen des brevets

(11) Veröffentlichungsnummer: **0 417 553 A2**

# (12) EUROPÄISCHE PATENTANMELDUNG

(21) Anmeldenummer: 90116603.3

(22) Anmeldetag: 30.08.90

(51) Int. Cl.5: **C08G 18/42**, C08G 18/10, C08G 18/32, C08G 18/66

(30) Priorität: 13.09.89 DE 3930523

(43) Veröffentlichungstag der Anmeldung: 20.03.91 Patentblatt 91/12

(84) Benannte Vertragsstaaten: AT BE DE ES FR GB IT NL SE

(71) Anmelder: BAYER AG

W-5090 Leverkusen 1 Bayerwerk(DE)

(72) Erfinder: Weider, Richard, Dr.
Quettinger Strasse 78
W-5090 Leverkusen 3(DE)
Erfinder: Scholl, Thomas, Dr.
Elbinger Strasse 33
W-4005 Meerbusch 2(DE)
Erfinder: Eisele, Ulrich, Dr.
Alfred Kubin Strasse 13
W-5090 Leverkusen 1(DE)
Erfinder: Dhein, Rolf, Dr.
Deswatinesstrasse 30
W-4150 Krefeld 1(DE)

(54) Polyurethanelastomere mit geringer Härte.

(57) Thermoplastische Polyurethane mit wenigstens im wesentlichen linearer Struktur werden erhalten auf Basis von organischen Polyisocyanaten, Polyesterderivaten einer Dicarbonsäure mit wenigstens 14 C-Atomen, wobei die Polyesterderivate mindestens zwei gegenüber Isocyanaten reaktionsfähige Wasserstoffatome aufweisen und nichtphenolischen Kettenverlängerungsmitteln.

EP 0 417 553 A2

EP 0 417 553 A2

## POLYURETHANELASTOMERE MIT GERINGER HÄRTE

Die Erfindung betrifft Polyurethanelastomere mit geringer Härte, ein Verfahren zu ihrer Herstellung und ihre Verwendung.

Der mit den dem Stand der Technik entsprechenden Polyurethanelastomeren erreichbare Härtebereich liegt zwischen ca. 80 Shore A und 75 Shore D und deckt damit einen Bereich zwischen den typischen Kautschukelastomeren (20 bis 80 Shore A) und harten Kunststoffen (>55 Shore D) ab.

Die Härte wird dabei überwiegend von dem Anteil der aus Isocyanat und Kettenverlängerer gebildeten Hartphase bestimmt. Unterhalb von 80 Shore A verschlechtern sich jedoch die Eigenschaften deutlich: wird der Anteil der Hartphase bei konstantem Polydiol erniedrigt, verschlechtert sich die Wärmeformbeständigkeit aufgrund der teilweisen Mischbarkeit der Hartphase mit dem Polydiolanteil. Wird der Hartphasenanteil durch Erhöhung des Molekulargewichts der Polydiolkomponente erniedrigt, verschlechtert sich die Kälteflexibilität der Produkte durch die mit dem Molgewicht steigende Kristallisationstendenz der Polydiole (vgl. auch Becker/Braun, Kunststoffhandbuch, Bd. 7, Polyurethane, S. 36, Carl Hanser Verlag München, Wien 1983).

Aus der DE-A-35 13 980 sind Matrixwerkstoffe hoher Härte bekannt, die erhältlich sind durch Umsetzung von Isocyanaten, phenolischen Kettenverlängerern und Weichsegmentbildern auf Basis von dimerisierten und/oder trimerisierten Fettsäuren. In der US-A-33 49 049 wird die Verwendung eines dimeren Fettsäurepolyols mit hohem Trimergehalt in einem Polyurethanlack mit verbesserter Chemikalienbeständigkeit beschrieben. Die Verwendung von geringen Anteilen Dimerfettsäurepolyolen wird in der EP-A-156 665 ( = US-A-46 02 079) beschrieben. Hierzu werden maximal 35 Gew.-% Dimerfettsäure eingesetzt.

Die Verwendung höherer Anteile von vorwiegend dimerer Fettsäure ist keineswegs naheliegend, da bekannt ist, daß große Anteile von Polydiolen mit vorwiegend aliphatischem Charakter, z.B. OH-terminiertes Polybutadien oder dessen hydrierte Form, durch die schlechte Mischbarkeit mit der Hartphase Materialien mit nur mäßigen mechanischen Eigenschaften (Festigkeit) ergeben (Houben-Weyl, Handbuch der organischen Chemie, Band E20, S. 1569; 1599).

Aus der US-A-32 64 236 sind bereits isocyanatmodifizierte Polyester auf Basis eines Glykols und einer polymeren Fettsäure bekannt.

Weiche Polyurethanelastomere mit hoher Wärmeformbeständigkeit, ausgezeichneter Kalteflexibilität und hoher Elastizität sind aus diesem Stand der Technik aber nicht bekannt.

Der Erfindung lag die Aufgabe zugrunde, weiche hochelastische Polyurethanelastomere mit hoher Wärmeformbeständigkeit und ausgezeichneter Kälteflexibilität zur Verfügung zu stellen.

Gegenstand der Erfindung sind thermoplastische Polyurethane mit wenigstens im wesentlichen linearer Struktur auf Basis von organischen Polyisocyanaten I, wenigstens einem Polyesterderivat II mit mindestens zwei gegenüber Isocyanaten reaktionsfähigen Wasserstoffatomen und Kettenverlängerungsmitteln III, dadurch gekennzeichnet, daß das Polyesterderivat II ein Polyester einer $\alpha,\omega$-Dicarbonsäure IIa mit wenigstens insgesamt 16 C-Atomen ist, daß der Anteil der Dicarbonsäure IIa bezogen auf das gesamte thermoplastische Polyurethan größer als 35 Gew.-% ist und daß der Kettenverlängerer III keine phenolischen OH-Gruppen aufweist.

Zum Aufbau des thermoplastischen Polyurethans können gegebenenfalls Katalysatoren, weitere an sich bekannte Additive sowie zusätzlich andere NCO-reaktive Verbindungen mit einem Molekulargewicht größer als 400 verwendet werden.

Gegenstand der Erfindung ist weiterhin ein Verfahren zur Herstellung thermoplastischer Polyurethane mit wenigstens im wesentlichen linearer Struktur durch Umsetzung der organischen Polyisocyanate I mit den Polyesterderivaten II und den Kettenverlängerungsmitteln III.

Ein weiterer Gegenstand der Erfindung ist die Verwendung der erfindungsgemäßen thermoplastischen Polyurethane für medizinische Zwecke.

Die erfindungsgemäßen thermoplastischen Polyurethane haben in einer bevorzugten Ausführungsform eine Härte kleiner als 80 Shore A, insbesondere kleiner als 75 Shore A. Sie sind im wesentlichen linear, vorzugsweise haben sie einen Volumenflußindex (MVI) gemessen bei 190°C mit einer Prüfkraft von 10 kp (DIN 53735; ISO 1132) von wenigstens 0,3) insbesondere wenigstens 1 cm³/10 min..

Bevorzugte Polyesterderivate II sind Polyester, Polyestercarbonate, Polyetherester und Polyetherestercarbonate mit endständigen OH- oder $NH_2$-Gruppen.

Besonders bevorzugte Polyester II haben eine Säurezahl unter 2 und eine Hydroxylzahl zwischen 11 und 170.

Bevorzugte Dicarbonsäuren IIa sind dimere Fettsäuren, die durch reduktive Dimerisierung von ungesättigten aliphatischen Monocarbonsäuren, insbesondere von Monocarbonsäuren mit 8 bis 22 C-Atomen,

2

speziell Ölsäuren gewonnen werden. Der dabei entstehende Trimeranteil beträgt maximal 5 Gew.-% bezogen auf die dimere Fettsäure, insbesondere maximal 1,5 Gew.-%.

Die erfindungsgemäß zu verwendenden Polyesterderivate II können in an sich bekannter Weise durch Kondensation von Dicarbonsäuren IIa mit nicht vicinalen Diolen gegebenenfalls unter Zusatz von Diaryl- oder Dialkylcarbonaten oder Phosgen erhalten werden. Die hierbei erhaltenen endständigen OH-Gruppen können durch $NH_2$-Gruppen ersetzt werden.

Die erfindungsgemäß zu verwendenden Polyesterderivate können dabei neben Dimersäure auch andere aliphatische Dicarbonsäuren wie z.B. Glutarsäure, Adipinsäure, Korksäure, Azelainsäure, Sebacinsäure oder Dodecandisäure oder deren Gemische enthalten. Vorzugsweise wird jedoch reine Dimersäure eingesetzt. Als nicht vicinale Diole zur Kondensation eignen sich z.B. Ethylenglykol, 1,3-und 1,2-Propandiol, Di-, Tri-, Tetra-, Octa-ethylenglykol, Dipropylenglykol, Tripropylenglykol, 1,4-Butandiol, 1,3-und 1,5-Pentandiol, 2,2-Dimethyl-1,3-propandiol, 1,6-Hexandiol und höhere, gegebenenfalls verzweigte aliphatische Diole. Die Molgewichte der Komponenten II können dabei zwischen 700 und 10 000 betragen.

Als organische Polyisocyanate I eignen sich die gleichen Verbindungen, welche bei bisher bekannten Verfahren eingesetzt werden und wie sie z.B. im Kunststoffhandbuch, Band VII, Polyurethane, Hansen Verlag, München 1983 oder in Houben-Weyl, Makromolekulare Stoffe, Band E20 beschrieben werden. Bevorzugt werden aromatische oder aliphatische Diisocyanate verwendet, besonders bevorzugt Bis-(isocyanatophenyl)-methan. Es können aber auch andere Diisocyanate verwendet werden, z.B. aliphatische Diisocyanate wie Tetra- oder Hexamethylendiisocyanat, Trimethylhexamethylendiisocyanat, cycloaliphatische Diisocyanate wie Cyclohexyldiisocyanat, Isophorondiisocyanat, Dicyclohexylmethandiisocyanat oder aromatische Diisocyanate wie Benzoldiisocyanat, Toluoldiisocyanat, Dichlordiphenylmethan-diisocyanat, Dimethyldiphenyl-methandiisocyanat oder Dibenzyl-diisocyanat.

Kettenverlängerungsmittel III sind vorzugsweise bifunktionelle Polyole aus der Gruppe Ethylenglykol, Propylenglykol, 1,4-Butandiol, 1,5-Pentandiol, 1,6-Hexandiol, 1,4-Cyclohexandimethanol, Hydrochinon-bis-(2-hydroxyethyl)ether oder 1,5-Bis-(2-hydroxyethoxy)-naphthalin. Sie haben vorzugsweise ein Molekulargewicht von 32 bis 399, insbesondere 62 bis 220.

In einer besonders bevorzugten Ausführungsform ist das Polyisocyanat I ein Isocyanat auf Diphenylmethanbasis und der Kettenverlängerer III Butandiol.

Eine andere bevorzugte Ausführungsform ist dadurch gekennzeichnet, daß die Komponenten I bis III im wesentlichen bifunktionell sind und pro NCO-Äquivalent 0,9 bis 1,2 Äquivalente NCO-reaktiver Verbindungen eingesetzt werden.

Gegebenenfalls können zur Herstellung von Polyurethanen bekannte Katalysatoren wie organische oder anorganische Zinnverbindungen, Amine oder Alkalimetallverbindungen eingesetzt werden.

Weitere Zusatzmittel wie Treibmittel, Stabilisatoren, Emulgatoren, Farben, Pigmente oder Füllstoffe können ebenfalls in an sich bekannter Art verwendet werden.

Die erfindungsgemäßen thermoplastischen Polyurethane können in unterschiedlicher Weise hergestellt werden. In einer bevorzugten Ausführungsform wird der Polyurethanthermoplast nach dem Band- cder Schnecken-Verfahren hergestellt (siehe Becker/Braun, Kunststoff handbuch, Band 7; Polyurethane, Kapitel 8.2.1 Seite 428 ff, Carl Hanser Verlag München, Wien 1983). In einer bevorzugten Ausführungsform wird eine Zweischneckenknetmaschine verwendet.

Die Polyurethan-bildenden Komponenten können über eine einzige oder auch über mehrere Einspeisstellen in den Extruder eingebracht werden Man kann die Komponenten sowohl getrennt als auch vorvermischt in die Schneckenmaschine einbringen, siehe DE-A-28 42 806. Ein besonders bevorzugtes Verfahren ist dadurch gekennzeichnet, daß zunächst aus dem Isocyanat I und dem Polyesterderivat II ein Prepolymer gebildet wird zu dem der Kettenverlängerer gegeben wird.

Neben der im Vergleich zu den unter Verwendung von Dimerfettsäure-freien oder geringen Anteilen Dimerfettsäure enthaltenden Polyurethanelastomeren geringen Härte und hohen Elastizität zeichnen sich die erfindungsgemäßen Polyurethanelastomere außerdem durch eine mit der verringerten Oberflächenspannung zusammenhängende, gute Verträglichkeit mit Körpergewebe und Blut und eine lange Haltbarkeit im Kontakt mit Körperflüssigkeiten aus. Sie eignen sich daher in besonderer Weise zur Herstellung von medizinischen Einrichtungen wie z.B. Blutbeutel, Katheder, Schrittmacherzuleitungen, intravenös einzusetzende Schläuche oder Gefäßprothesen. Es ist hierbei möglich, pharmakologisch wertvolle Wirkstoffe in die Materialien einzubauen, insbesondere blutgerinnungshemmende Substanzen wie Heparin oder Immunsuppressiva oder Antibiotika oder andere an sich bekannte und zum Beispiel in Polymer Science and Technology, Band 34, "Polymers in Medicine II", Plenum Press, New York, 1983 beschriebene Wirkstoffe.


Beispiele

3

Im folgenden bedeuten:

Komponente II: Polyester aus

a) hydrierte Dimerfettsäure ($C_{36}$-Carbonsäure, erhalten durch Dimerisierung von Fettsäuren, CAS-Nr. 68 783-41-5, Jod-Zahl 7) der Säurezahl 197, Trimergehalt 1 %, Monomergehalt 0,1 %, und

b) Butandiol Eigenschaften: OH-Zahl 49,2

Komponente II.1: Die Komponente II aber mit einer OH-Zahl von 50,7

Allgemeine Ausführung:

Jeweils 0,05 Mol der Komponente II werden bei 100°C mit der Gesamtmenge an Bis-(4-isocyanatophenyl)-methan zu einem Prepolymer umgesetzt. Zu der Schmelze wird bei 110°C die zu den restlichen NCO-Gruppen äquivalente Menge Kettenverlängerungsmittel zugegeben, die Mischung kurz entgast, in eine Form gegossen und bei 110°C für 8 Stunden getempert. Für die Messung der mechanischen Eigenschaften werden 1 oder 2 mm starke Platten durch Pressen bei 200°C hergestellt.

Die Vergleichsbeispiele wurden durch Verwendung eines Polyesterdiols aus Adipinsäure und Butandiol mit der OH-Zahl 49,7 an Stelle der Komponente II hergestellt.

Aus den folgenden Beispielen geht die geringe Härte der erfindungsgemäßen Polyurethane hervor:

## Beispiel 1

Unter Verwendung von Butandiol als Kettenverlängerungsmittel wurde wie oben verfahren. Es wurden thermoplastische Polyurethane erhalten, die im Hinblick auf den prozentualen Anteil des Hartsegmentes erstaunlich weich sind wie aus folgender Tabelle hervorgeht.

| Kettenverlängerer Butandiol | | | | Härte | |
|---|---|---|---|---|---|
| g MDI | g Butandiol | Polyester | Hartsegment % | Shore A | Shore D |
| 37,5 | 9 | II | 28,92 | 80 | 28 |
| 50 | 13,5 | II | 35,71 | 85 | 30 |
| 50 | 13,5 | II-1 | 36,49 | 87 | 35 |
| 62,5 | 18 | II-1 | 41,32 | 89 | 39 |
| 75 | 22,5 | II-1 | 46,88 | 92 | 44 |

Wird statt des erfindungsgemäß zu verwendenden Polyesterderivates ein Adipinsäurepolyester mit einer OH-Zahl von 49,7 eingesetzt wird eine derartige Weichheit bei gleichem Hartsegmentanteil nicht erreicht.

## Beispiel 2

Es wurde ein thermoplastisches Polyurethan wie unter Beispiel 1 angegeben hergestellt mit der Abänderung, daß als Polyester II ein Polyester aus der Dimerfettsäure aus Beispiel 1 und Neopentylglykol der OH-Zahl 28 bzw. aus Dimerfettsäure/Butandiol mit einer OH-Zahl von 37 verwendet wird. Die erhaltenen thermoplastischen Polyurethane zeigten folgende Werte:

% Hartsegment: 19

Härte Shore A: 61

Zugfestigkeit: 12 N/mm²

Schmelztemperatur Hartsegment: 145°C

Brittlenessp.: -40°C

Komponente II: Dimersäure/Butandiol OH-Zahl 37:

% Hartsegment: 23,5

Härte Shore A: 72 Zugfestigkeit: 17 N/mm²

Schmelztemperatur Hartsegment: 150°C

Brittlenessp.: -40°C

Derartig weiche thermoplastische Polyurethane unter Verwendung üblicher Polyole sind nicht erhältlich: Ein Polyurethan mit dem Vergleichspolyester aus Beispiel 1 hat bei einem Hartsegmentanteil von 20,8 Gew.-% die Härte 94 Shore A.

Beispiel 3

Ein Polyester aus der Dimersäure aus Beispiel 1 und Ethylenglycol mit der OH-Zahl 34,8 wird als Komponente II eingesetzt. Das erhaltene Polyurethan hat bei einem Hartsegmentanteil von 22,4 % die Härte von 60 Shore A.

Beispiel 4

Ein Polyester aus der Dimersäure aus Beispiel 1 und Hexandiol (OH-Zahl 27,0) wird unter Verwendung von Hexamethylendiisocyanat statt Bis-(4-isocyanatophenyl)-methan und Butandiol als Kettenverlängerungsmittel eingesetzt. Das erhaltene Produkt hat bei einem Hartsegmentanteil von 14,2 % die Härte von 66 Shore A.

Beispiel 5

Beispiel 4 wurde unter Verwendung von 1,4-Bis-(2-hydroxyethoxy)-benzol statt Butanol als Kettenverlängerer wiederholt. Das erhaltene Polyurethan hat bei einem Hartsegmentanteil von 13 % die Härte von 76 Shore A.

Beispiel 6

Ein Polyetherester aus der Dimersäure aus Beispiel 1 und Diethylenglycol mit der OH-Zahl 34,7 wird als Komponente II eingesetzt. Das erhaltene Polyurethan hat bei einem Hartsegmentanteil von 22,4 % die Härte von 68 Shore A.

Beispiel 7

Ein Polyester aus der Dimersäure aus Beispiel 1 und Nexandiol mit der OH-Zahl 20 wird als Komponente II eingesetzt. Das erhaltene Polyurethan hat bei einem Hartsegmentanteil von 14,2 % die Härte von 53 Shore A.

Beispiel 8

Ein thermoplastisches Polyurethan wird hergestellt wie in Beispiel 1 angegeben mit der Abänderung, daß das Polyesterderivat II eine OH-Zahl von 45,7 aufweist. Das erhaltene thermoplastische Polyurethan hat 27,5 Gew.-% Hartsegmentanteil. Die Grenzflächenspannung dieses Polyurethans gegen Wasser beträgt 24,6 mN/m.

Übliche thermoplastische Polyurethane haben eine höhere Grenzflächenspannung und sind deshalb für medizinische Implantate nicht so geeignet.

Beispiel 9

Ein Polyester aus der Dimersäure aus Beispiel 1 und Hexandiol (OH-Zahl 30) wird unter Verwendung von Bis-(4-isocyanato-cyclohexyl)-methan statt Bis-(4-isocyanatophenyl)-methan und Butandiol als Kettenverlängerungsmittel eingesetzt:

Hartsegmentanteil: 31 Gew.-%
Härte: 71 Shore A
Bruchdehnung: 500 %
Zugfestigkeit: 20,7 MPa

Das erhaltene Elastomer ist transparent.

Beispiel 10

Der Polyester aus Beispiel 9 wird unter Verwendung von Bis-(4-isocyanatophenyl)-methan und Butandiol als Kettenverlängerungsmittel eingesetzt:

|  | 10 a | 10 b |
|---|---|---|
| Hartsegmentanteil: | 25,8 % | 16,1 % |
| Härte: | 65 Shore A | 54 Shore A |
| Bruchdehnung (DIN 53 504) | 744 % | 822 % |
| Zugfestigkeit (DIN 53 504) | 17 MPa | 12 MPa |
| Weiterreißfestigkeit (DIN 53 515) | 25 KN/m | 20 KN/m |
| Rückprallelastizität (DIN 53 512) | 45 % | 43 % |
| Druckverformungsrest (24 h, 70° C, DIN 53 517) | 45 % | 52 % |

Beispiel 11

Das Beispiel 10 wird wiederholt und dabei ein Hartsegmentanteil von 18,3 Gew.-% eingestellt (11 a)
Härte: 59 Shore A
Bruchdehung: 830 %
Zugfestigkeit: 13 MPa

Zum Vergleich wurde ein Polyurethanelastomer mit dem Adipinsäurepolyester aus Beispiel 1 unter Verwendung von Bis-(4-isocyanatophenyl)-methan und Butandiol als Kettenverlängerungsmittel mit einem Hartsegmentanteil von 29 % hergestellt (11 b).

An beiden Proben wurde bei 20° C die bleibende Verformung nach 30 Minuten Dehnung gemessen (11 a: erfindungsgemäßes Beispiel, 11 b: Vergleich).

|  | 11a | 11b | 11a | 11b | 11a | 11b | 11a | 11b |
|---|---|---|---|---|---|---|---|---|
| Dehnung % | 100 | 100 | 150 | 150 | 200 | 200 | 250 | 250 |
| bleibende Verformung % nach Dehnung | 7 | 12 | 12 | 20 | 21 | 48 | 30 | 78 |

**Ansprüche**

1. Thermoplastische Polyurethane mit wenigstens im wesentlichen linearer Struktur auf Basis von organischen Polyisocyanaten I, wenigstens einem Polyesterderivat II mit mindestens zwei gegenüber Isocyanaten reaktionsfähigen Wasserstoffatomen und Kettenverlängerungsmitteln III, dadurch gekennzeichnet, daß das Polyesterderivat II ein Polyester einer $\alpha,\omega$-Dicarbonsäure IIa mit wenigstens insgesamt 16 C-Atomen ist, daß der Anteil der Dicarbonsäure IIa bezogen auf das gesamte thermoplastische Polyurethan größer als 35 Gew.-% ist und daß der Kettenverlängerer III keine phenolischen OH-Gruppen aufweist.

2. Thermoplastische Polyurethane nach Anspruch 1, dadurch gekennzeichnet, daß das Polyesterderivat II ein Polyester, Polyestercarbonat, Polyetherester oder Polyetherestercarbonat mit endständigen OH- oder $NH_2$-Gruppen ist.

3. Thermoplastische Polyurethane nach Anspruch 1 oder 2, dadurch gekennzeichnet, daß die Dicarbonsäure IIa ein Dimeres einer ungesättigten aliphatischen Monocarbonsäure mit wenigstens 8 C-Atomen und maximal 5 Gew.-% Trimeranteil ist.

4. Thermoplastisches Polyurethan nach wenigstens einem der vorhergehenden Ansprüche, dadurch gekennzeichnet, daß der Polyester II eine Säurezahl unter 2 und Hydroxylzahlen zwischen 11 und 170 aufweist.

5. Thermoplastisches Polyurethan nach wenigstens einem der vorhergehenden Ansprüche, dadurch gekennzeichnet, daß das Polyisocyanat I ein Isocyanat auf Diphenylmethanbasis und der Kettenverlängerer III Butandiol ist.

6. Thermoplastische Polyurethane nach wenigstens einem der vorhergehenden Ansprüche, dadurch gekennzeichnet, daß die Komponenten I bis III im wesentlichen bifunktionell sind und pro NCO-Äquivalent 0,9 bis 1,2 Äquivalente NCO-reaktiver Verbindungen eingesetzt werden.

7. Polyurethanelastomere nach wenigstens einem der vorhergehenden Ansprüche, dadurch gekennzeichnet, daß sie eine Härte von kleiner als 80 Shore A aufweisen.

8. Verfahren zur Herstellung thermoplastischer Polyurethane mit wenigstens im wesentlichen linearer Struktur durch Umsetzung von organischen Polyisocyanaten I, wenigstens einem Polyesterderivat mit mindestens zwei gegenüber Isocyanaten reaktionsfähigen Wasserstoffatomen und Kettenverlängerungsmitteln III, dadurch gekennzeichnet, daß das Polyesterderivat II ein Polyester einer $\alpha,\omega$-Dicarbonsäure IIa mit wenigstens insgesamt 16 C-Atomen ist, daß der Anteil der Dicarbonsäure IIa bezogen auf das gesamte thermoplastische Polyurethan großer als 35 Gew.-% ist und das der Kettenverlängerer III keine phenolischen OH-Gruppen aufweist.